# DEMANDE DE BREVET EUROPEEN

(11) **EP 0 911 917 A1**
(43) Date de publication de la demande: **28.04.1999**
(21) Numéro de dépôt: 98402551.0
(22) Date de dépôt: 14.10.1998
(51) Int. Cl.: H01R 33/965

(54) **Capuchon pour protéger la zone de jonction entre un élément terminal de tube luminescent et un câble d'alimentation électrique**

(30) Priorité: 16.10.1997 FR 9712982
(71) Demandeur: Aupem Sefli, 45504 Gien Cedex (FR)
(72) Inventeur: Cazeaux, Jérôme, 77250 Veneux les Sablons (FR); Depond, Jean-Marie, 41600 Nouan le Fuzeller (FR); Galibert, Patrick, 45500 Poilly les Gien (FR)
(74) Mandataire: CABINET BONNET-THIRION

(57) **Abrégé**

Ce capuchon comporte un corps central 21, une jupe 22 disposée entre le corps central 21 et l'une des extrémités du capuchon et un col 23 disposé entre le corps central 21 et l'autre extrémité du capuchon, le corps central 21 étant adapté à loger des moyens de raccordement 14 entre l'élément terminal 1 et le câble 3, la jupe 22 étant souple et élastique afin d'épouser la surface exteme d'une portion hémisphérique 7 que comporte l'extrémité fermée de l'enveloppe en verre 4 de l'élément terminal 1, le col 23 étant souple et muni d'une lèvre 26 annulaire élastique auto-serrante sur le câble 3, le capuchon 2 étant imperméable et ne présentant aucune ouverture autre que celle bordée par la jupe 22 et celle bordée par la lèvre 26.

## Description

L'invention a trait à la jonction entre tubes luminescents employés notamment dans les enseignes lumineuses et leurs câbles d'alimentation électrique.

L'invention vise à protéger efficacement ce type de jonction de l'humidité.

Elle propose à cet effet un capuchon pour protéger la zone de jonction entre un élément terminal de tube luminescent et un câble d'alimentation électrique, caractérisé en ce qu'il comporte un corps central, une jupe disposée entre le corps central et l'une des extrémités du capuchon et un col disposé entre le corps central et l'autre extrémité du capuchon, ledit corps central étant adapté à loger des moyens de raccordement entre ledit élément terminal et ledit câble, ladite jupe étant souple et élastique afin d'épouser la surface externe d'une portion hémisphérique que comporte l'extrémité fermée de l'enveloppe en verre dudit élément terminal, ledit col étant muni d'une lèvre annulaire élastique auto-serrante sur ledit câble, le capuchon étant imperméable et ne présentant aucune ouverture autre que celle bordée par ladite jupe et celle bordée par ladite lèvre.

Les contacts entre la jupe du capuchon et la portion hémisphérique de l'élément terminal d'une part et entre la lèvre auto-serrante du capuchon et le câble d'alimentation d'autre part, sont ainsi très étroits et empêchent donc le passage de l'humidité, de sorte que le capuchon isole la zone de jonction vis-à-vis de l'extérieur d'une façon complètement étanche.

La souplesse et l'élasticité de la jupe et de la lèvre permettent, avec autant d'efficacité, d'utiliser un même capuchon avec différents diamètres de câbles et d'éléments terminaux.

En outre, la souplesse d'au moins le col du capuchon, permet d'éviter qu'il ne produise une rupture de l'étanchéité à la suite d'une différence de pression entre l'intérieur et l'extérieur du capuchon, par exemple pour des raisons thermiques ou aérauliques.

On voit que le capuchon selon l'invention est particulièrement sûr contre la pénétration d'humidité dans la jonction réalisée, et qu'il évite par conséquent efficacement les dégradations qu'elle est susceptible de provoquer (corrosion et, les tensions élevées étant appliquées, arcages électriques).

Selon des caractéristiques préférées, ledit corps central est souple.

La totalité du capuchon est ainsi souple, ce qui est favorable non seulement pour les différences éventuelles de pression mentionnées ci-dessus, mais aussi pour des questions de positionnement vis-à-vis des moyens de raccordement à un câble dont est muni l'élément terminal, la souplesse du corps central permettant d'accepter des variations importantes du positionnement des moyens de raccordement par rapport à l'enveloppe en verre de l'élément terminal.

Dans certaines circonstances, il est avantageux, pour faciliter la manipulation du capuchon entièrement en matière souple, de prévoir que le corps central présente des nervures.

Selon d'autres caractéristiques préférées, le capuchon est formé d'une matière souple et élastique moulée d'une seule pièce.

La fabrication du capuchon est ainsi particulièrement simple, commode et économique, et au surplus on évite les risques de défaut d'étanchéité qui pourraient se produire à la jonction entre des constituants séparés du capuchon.

De préférence, ledit capuchon est en silicone.

Cette matière convient particulièrement bien pour le capuchon conforme à l'invention, compte tenu de son aptitude à être moulée, de sa souplesse et de son élasticité ainsi que de son imperméabilité.

Selon des caractéristiques préférées alternatives, ledit corps central est rigide.

On dispose ainsi d'un capuchon dont la manipulation, par l'intermédiaire du corps central, est relativement aisée, puisqu'en pressant sur le corps central, la rigidité de celui-ci évite qu'il ne soit appliqué contre la surface du câble, ce qui est susceptible de gêner le coulissement du capuchon le long de celui-ci.

On prévoit avantageusement, pour faciliter encore la manipulation du capuchon comportant un corps central rigide, qu'un un écrou que comportent les moyens de raccordement entre ledit élément terminal et ledit câble, est fixé audit corps rigide, à l'intérieur de celui-ci.

Selon d'autres caractéristiques préférées, le corps central du capuchon est droit.

Le capuchon convient ainsi pour disposer le câble d'alimentation coaxialement à l'élément terminal.

Selon des caractéristiques préférées alternatives, ledit corps central est coudé.

Ce capuchon convient pour disposer le câble d'alimentation radialement par rapport à l'élément terminal du tube luminescent.

Selon d'autres caractéristiques préférées, ladite lèvre annulaire élastique auto-serrante comporte deux portions annulaires concentriques, respectivement une portion de faible épaisseur qui entoure directement l'ouverture que borde ladite lèvre, et une portion plus épaisse qui entoure ladite portion de faible épaisseur.

Lorsque cette lèvre est mise en place sur le câble, la différence d'épaisseur entre les deux portions, qui se déforment toutes deux, fait qu'il y a deux zones annulaires de contact avec le câble, ce qui est favorable à la qualité de l'étanchéité procurée par la lèvre.

L'exposé de l'invention sera maintenant poursuivi par la description d'exemples de réalisation, donnée ci-après à titre illustratif et non limitatif, en référence aux dessins annexés. Sur ceux-ci :
- la figure 1 est une vue en élévation montrant, séparés les uns des autres, un élément terminal de tube luminescent, un câble d'alimentation électrique devant être raccordé à cet élément et un capuchon pour protéger le zone de jonction entre l'élément terminal et le câble d'alimentation, une fois leur raccordement effectué ;
- la figure 2 est une vue similaire où le câble et l'élément terminal sont raccordés l'un à l'autre et le capuchon en place sur leur zone de jonction ;
- la figure 3 est une vue agrandie en élévation-coupe prise au niveau de cette zone de jonction ;
- la figure 4 est une vue en perspective du capuchon ;
- la figure 5 en est la vue en coupe repérée par V-V sur la figure 4 ;
- les figures 6 et 7 sont des agrandissements des détails repérés respectivement par VI et VII sur la figure 5 ;
- la figure 8 est une vue similaire à la figure 3, montrant un mode alternatif de disposition du câble et une variante du capuchon ;
- les figures 9 et 10 sont des vues en élévation, respectivement de face et de côté, de la vis de la borne de raccordement que comporte l'élément terminal de tube luminescent ; et
- la figure 11 est une vue en élévation et en coupe partielle de l'écrou de cette borne de raccordement.

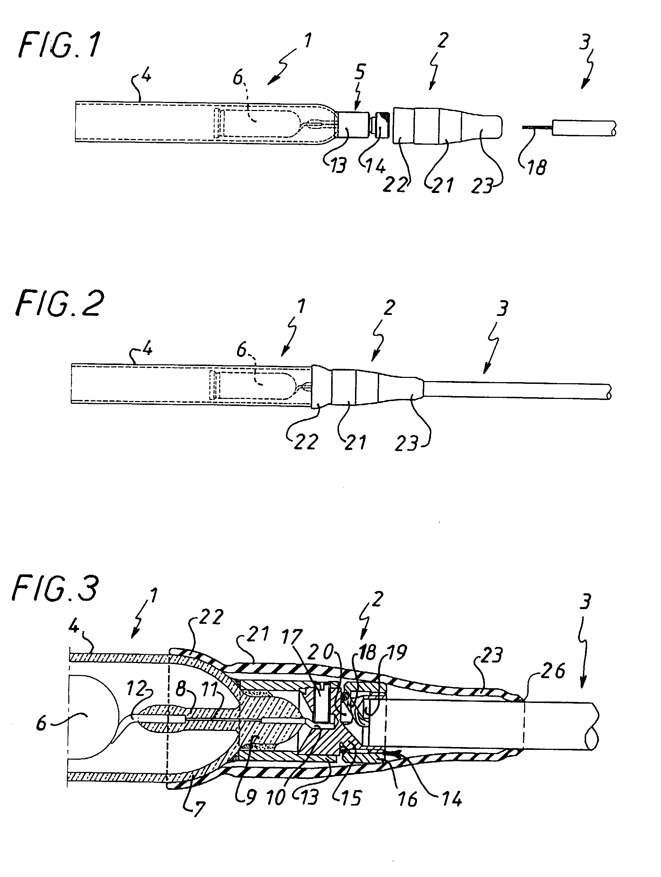

L'ensemble montré sur la figure 1 comporte un élément terminal 1 de tube luminescent, un capuchon de protection 2 et un câble d'alimentation électrique 3.

L'élément 1 comporte une enveloppe en verre 4 en forme de doigt de gant dont l'extrémité fermée se trouve en haut sur les dessins, des moyens de raccordement 5 au câble 3, disposés sur l'extrémité fermée de l'enveloppe 4, et une électrode métallique 6 disposée dans l'enveloppe 4 et reliée électriquement aux moyens de raccordement 5.

Ainsi qu'on le voit plus particulièrement sur la figure 3, l'extrémité fermée de l'enveloppe 4 présente une portion 7 de forme générale hémisphérique dont le centre se raccorde à un membre orienté coaxialement présentant une quille 8 en saillie du côté interne et une mamelon 9 en saillie du côté externe, la périphérie de la portion hémisphérique 7 se raccordant au reste de l'enveloppe 4, qui présente une forme tubulaire à section circulaire qui va jusqu'à l'extrémité opposée de l'enveloppe destinée à être raccordée au reste du tube luminescent.

Un fil conducteur 10 sort de l'extrémité fermée de l'enveloppe 4 au travers du mamelon 9 tandis qu'à l'intérieur de ce mamelon ce fil est connecté électriquement à un fil 11 plus fin qui va jusqu'à la quille 8 à l'intérieur de laquelle il est à son tour connecté à un troisième fil électrique 12 qui s'étend du fil 11 jusqu'à l'électrode 6, à laquelle l'autre extrémité du fil 12 est soudée.

Les moyens de raccordement 5 comportent un culot isolant 13 et une borne de raccordement 14 comportant une vis métallique 15, un écrou 16 et une vis radiale dite goupille filetée 17.

Le culot 13, qui est ici en céramique, a une forme générale tubulaire à section circulaire. Il est rapporté par collage de l'une de ses extrémités sur l'extrémité fermée de l'enveloppe 4, avec le mamelon 9 qui est logé dans le culot 13 et le bout de ce dernier qui s'appuie sur la portion hémisphérique 7.

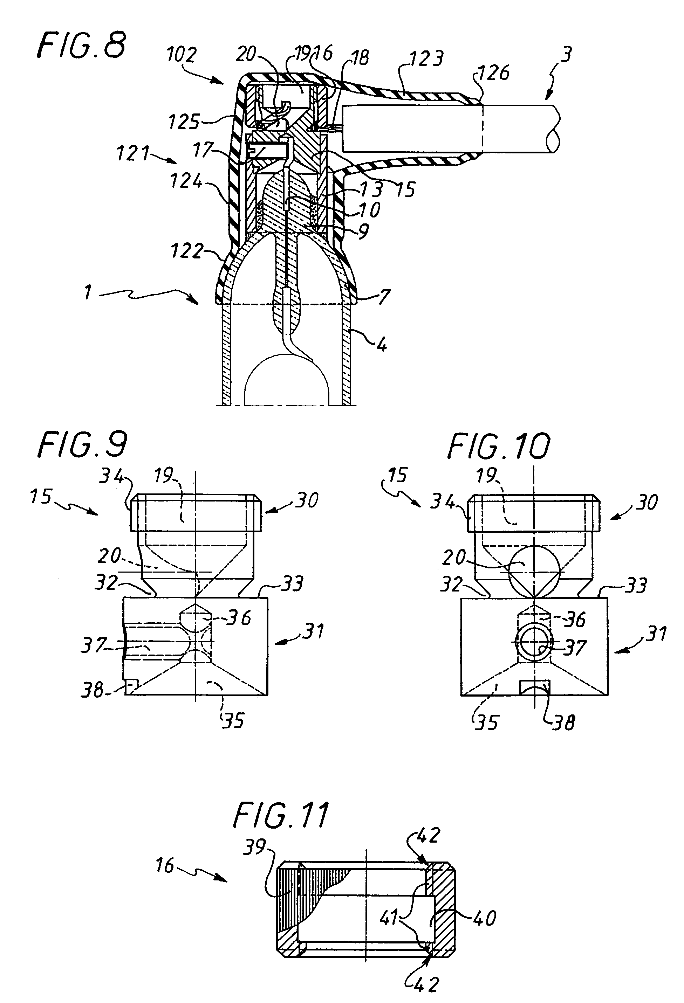

Ainsi qu'on l'expliquera plus en détail ultérieurement à l'appui des figures 9 et suivantes, la vis 15 comporte un pied qui est reçu dans le culot 13 et qui reçoit l'extrémité du fil conducteur 10, et une tige filetée qui reçoit le câble 3, la goupille 17 servant à immobiliser le fil conducteur 10 vis-à-vis de la vis 15 et cette dernière vis-à-vis du culot 13, l'écrou 16 servant à immobiliser le câble 3 vis-à-vis de la vis 15.

Pour recevoir le câble 3, et notamment une portion d'extrémité de celui-ci présentant une partie terminale dénudée 18, un canal est ménagé dans la tige filetée de la vis 15, ce canal présentant un tronçon coaxial 19 et un tronçon radial 20.

Dans l'exemple illustré sur les figures 2 et 3, le câble 3 a été introduit dans ce canal par le tronçon coaxial 19 jusqu'au-delà de la partie dénudée 18, celle-ci passant dans le tronçon radial 20 et entourant la tige 15, l'immobilisation ayant été ensuite effectuée par serrage de l'écrou 16.

Le capuchon 2 comporte un corps central 21, une jupe 22 disposée entre le corps 21 et l'extrémité du capuchon que l'on voit en bas sur les dessins ainsi qu'un col 23 disposé entre le corps 21 et l'extrémité qu'on voit en haut sur les dessins.

Le capuchon 2 est obtenu par moulage en une seule pièce d'une matière plastique souple et élastique, ici du silicone.

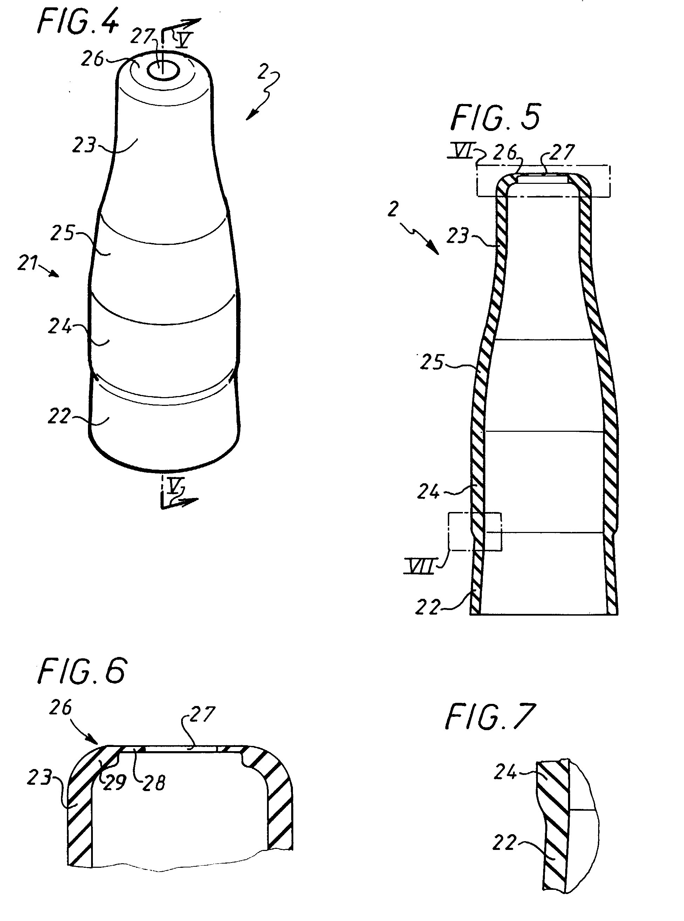

On va maintenant décrire plus en détail le capuchon 2, à l'appui des figures 4 à 7.

Le corps central 21 a une forme globalement tubulaire. Il comporte un tronçon 24 à section circulaire constante et une tronçon 25 tronconique se raccordant du côté du grand diamètre au tronçon 24 tandis que du côté du petit diamètre il se raccorde au col 23.

Celui-ci se rétrécit entre son extrémité où il se raccorde au corps central 21 et son extrémité opposée, qui présente une lèvre annulaire 26 bordant une ouverture 27.

Ainsi qu'on le voit particulièrement sur la figure 6, la lèvre 26 présente deux portion annulaires concentriques, respectivement une portion 28 amincie qui borde directement l'ouverture 27, et une portion 29 plus épaisse qui est située entre la portion amincie 28 et le reste du col 23. L'amincissement qui existe entre les portions 29 et 28 est pratiquée du côté interne, les surfaces externes des portions 28 et 29 étant à fleur l'une de l'autre.

Au contraire, comme on le voit plus particulièrement sur la figure 7, l'amincissement de paroi qui existe entre la portion 24 du corps central 21 et la jupe 22, est pratiqué du côté externe, les surfaces internes de la jupe 22 et du corps 21 étant à fleur l'une de l'autre.

La jupe 22 a une forme globalement tronconique, qui s'évase à l'opposé du corps central 21, son diamètre d'extrémité étant légèrement plus important que celui par lequel elle se raccorde au corps central 21.

On va maintenant expliquer comment l'on réalise le raccordement entre l'élément terminal 1 et le câble 3 ainsi que la mise en place du capuchon 2.

On commence par engager celui-ci sur le câble 3, en faisant passer ce dernier au travers de l'orifice 27 et en faisant coulisser le capuchon 2 suffisamment loin sur le câble 3 pour qu'un tronçon d'extrémité de celui-ci soit disposé au-delà de la jupe 22.

On effectue alors le raccordement entre le tronçon d'extrémité du câble 3 et la borne 5 comme expliqué précédemment.

On fait ensuite coulisser le capuchon 2 le long du câble 3 jusqu'à amener la jupe 22 à être en contact avec la portion hémisphérique 7 de l'enveloppe 4 de l'élément 1.

On est alors dans la configuration montrée sur la figure 3.

On observera que le corps 21 a une conformation qui lui permet de loger les moyens de raccordement 5, que la souplesse et l'élasticité de la jupe 22 lui permettent d'épouser la surface externe de la portion hémisphérique 7 à la façon d'une ventouse, et que de même la souplesse et l'élasticité de la lèvre 26 lui permettent d'être serrée sur le câble 3.

On observera plus précisément, à propos de la lèvre 26, que celle-ci est en contact avec la surface externe du câble 3 par deux portions annulaires, respectivement le bout libre de la portion 28 et l'arête de la portion 29 qui est à l'aplomb du raccordement de cette dernière avec la portion 28.

La matière dont est constitué le capuchon 2 étant imperméable et tant la jupe 22 que la lèvre 26 s'appuyant de façon étanche respectivement sur l'élément terminal 1 et sur le câble 3, le capuchon 2 isole son contenu de l'extérieur, d'une façon étanche, ce qui permet de protéger ce contenu des dégâts susceptibles d'être causés par l'humidité, qui est source de corrosion et d'arcage électrique.

La figure 8 montre l'élément terminal 1 et le câble électrique 3 raccordés l'un à l'autre dans une position où le câble 3 est disposé radialement et non pas coaxialement, le capuchon 2 étant remplacé par un capuchon 102 similaire, mais où le corps central 21 est remplacé par un corps central 121. On a employé pour le capuchon 102 les mêmes références numériques que pour le capuchon 2, mais augmentées du chiffre 100.

Le corps central 12 du capuchon 102 comporte une portion 124 pratiquement identique à la portion 24 du corps 21 du capuchon 2, qui est notamment tubulaire à section cylindrique. D'une façon générale, la portion 125 est similaire à la portion 25, mais elle est coudée au lieu d'être droite, son extrémité qui se raccorde au col 123 étant disposée transversalement à son extrémité qui se raccorde au tronçon 124, alors que dans la portion 25 ces deux extrémités sont orientées parallèlement l'une à l'autre.

La jupe 122 et le col 123 sont identiques à la jupe 22 et au col 23, respectivement.

L'opération de raccordement entre l'élément 1 et le câble 3 ainsi que la mise en place du capuchon 102 sont similaires aux opérations requises pour effectuer la jonction dans la configuration de la figure 3, mais le câble 3 est introduit dans le canal de la tige filetée de la vis 15 par le tronçon radial 20 de celle-ci et le bout de la partie dénudée 18 est logé dans le tronçon coaxial 19 de ce canal.

On va maintenant décrire plus en détail la vis 15 de la borne de raccordement 14, à l'appui des figures 9 et 10.

Ainsi qu'indiqué précédemment, la vis 15 comporte une tige filetée 30 destinée à recevoir le câble 3 et à l'immobiliser en coopération avec l'écrou 16, ainsi qu'un pied 31 destiné à être reçu dans le culot 13 et à recevoir le fil conducteur 10 et une portion de la goupille 17.

Comme expliqué ci-dessus, le canal ménagé dans la tige filetée 30 présente un tronçon 19 coaxial à la vis 15 et un tronçon radial 20, les tronçons 19 et 20 se raccordant l'un à l'autre.

Le tronçon 19 présente, à partir de l'extrémité libre de la tige 30, une portion de forme cylindrique ayant un diamètre suffisamment grand pour recevoir une partie non dénudée du câble 3, comme montré sur la figure 3, le tronçon 19 présentant au-delà de cette partie cylindrique, une partie conique dans laquelle débouche le tronçon radial 20, qui est cylindrique et de diamètre plus petit que la partie cylindrique du tronçon coaxial 19, seule une partie dénudée 18 du câble 3 devant passer par le tronçon radial 20.

Ce dernier débouche, par sa zone la plus éloignée de l'extrémité libre de la tige 30, dans une gorge 32 ménagée dans la tige 30, la gorge 32 étant prévue pour loger le morceau de la partie 18 du câble 3 qui sort par le tronçon radial 20 (configuration de la figure 3) ou rentre dans celui-ci (configuration de la figure 8).

Le tronçon 20 est tangent, par la partie de sa surface latérale la plus éloignée de l'extrémité libre de la tige 30, à un épaulement 33 que comporte la vis 15, l'écrou 16 étant prévu pour venir serrer contre l'épaulement 33 le morceau de la partie 18 logé dans la gorge 32, comme montré sur les figures 3 ou 8.

La tige 30 présente une partie filetée 34 qui ne s'étend que sur une certaine longueur à partir de l'extrémité libre de cette tige, celle-ci présentant entre l'épaulement 33 et la partie filetée 34 une surface externe lisse dont le diamètre général est légèrement inférieur au diamètre à fond de filet de la partie 34, pour des raisons de coopération avec l'écrou 16, expliquées plus loin.

Le pied 31 de la vis 15 a une forme générale extérieure cylindrique de diamètre légèrement supérieur à celui de la partie filetée 34 de la vis 30.

A partir de l'extrémité libre du pied 31, c'est-à-dire de son extrémité qui est opposée à la tige 30, est ménagé un creux 35 de forme tronconique qui converge, depuis une ouverture de diamètre légèrement inférieur à celui du pied 31, vers un trou borgne orienté coaxialement, de diamètre beaucoup plus petit. Un trou taraudé 37, orienté radialement, est disposé juste en-dessous du tronçon radial 20, et s'étend entre le trou 36 et l'extérieur du pied 31.

Le trou 36 sert à loger le bout du fil conducteur 10, le trou taraudé 37 à recevoir la goupille filetée 17, et le creux 35 sert à guider le bout du fil 10 vers le trou 36 et à recevoir l'extrémité du mamelon 9.

Une petite encoche parallélépipédique 38 est ménagée sous l'orifice de sortie du trou taraudé 37. Elle est prévue pour coopérer avec un ergot prévu sur le culot 13, afin de positionner la vis 15 dans la position angulaire requise pour pouvoir mettre en place la goupille 17.

L'écrou 16 présente extérieurement un moletage 39 longitudinal pour faciliter sa prise en main.

Du côté interne, l'écrou 16 présente une gorge 40 de diamètre légèrement plus grand que le diamètre à fond de filet du taraudage 41 qui se trouve de part et d'autre de la gorge 40, ce taraudage s'étendant sur une longueur très faible du côté qui se trouve en-dessous de la gorge 40 sur la figure 11, et sur une longueur plus importante du côté qui se trouve au-dessus.

La longueur sur laquelle s'étend la gorge 40 est légèrement supérieure à celle de la partie filetée 34 de la vis 30.

L'écrou 16 se met en place sur la vis 30 en se présentant sur cette dernière avec le côté que l'on voit en bas sur la figure 11 qui rencontre le premier la partie filetée 34 ; on met donc en prise la petite partie du taraudage 41 que l'on voit sous la gorge 40 avec la partie filetée 34, on continue le vissage de l'écrou 16 jusqu'à ce que la partie filetée 34 se trouve dans la gorge 40, et on met légèrement en prise la partie du taraudage 41 que l'on voit au-dessus de la gorge 40 avec la partie filetée 34.

Une fois le câble 3 mis en place, il n'y a plus qu'à poursuivre le vissage de l'écrou 16 pour arriver à la position d'immobilisation du câble 3 montrée sur la figure 3 ou sur la figure 8.

La gorge 40 sert à éviter de dégager involontairement l'écrou 16 de la tige 30, et limite ainsi les risques de perdre cet écrou : en effet, lorsque la partie du taraudage 41 que l'on voit au-dessus de la gorge 40 cesse d'être en prise avec la partie filetée 34, il faut, pour poursuivre le dévissage de l'écrou 16, mettre en prise la partie du taraudage 41 que l'on voit sous la gorge 40, ce qui nécessite un positionnement précis de l'écrou 16 vis-à-vis de la partie 34, qui a très peu de chances de s'effectuer spontanément, l'écrou 16 toumant plutôt fou avec la partie filetée 34 qui est logée dans la gorge 40.

On observera qu'à chaque extrémité du taraudage 41, il est pratiqué un chanfrein 42, et que celui que l'on voit en bas sur les dessins favorise la coopération de l'écrou 16 avec le morceau de la partie 18 du câble 3 qui est serrée contre l'épaulement 33.

On va maintenant expliquer comment l'on procède à la mise en place des moyens de raccordement 5 sur le reste de l'élément terminal 1.

On commence par coller le culot 13 sur l'extrémité fermée de l'enveloppe 4, puis l'on introduit le pied 31 de la vis 15 dans le culot 13, le fil conducteur 10 s'introduisant alors dans le creux 35 puis dans le trou coaxial 36, et l'on manoeuvre la vis 35 jusqu'à avoir mis en place l'encoche 38 sur l'ergot correspondant prévu sur le culot 13. On met alors en place la goupille filetée 17 dans le trou taraudé 37, au travers d'un trou lisse correspondant orienté radialement prévu dans le culot 13, et on procède au vissage de la goupille 17 pour immobiliser le fil conducteur 10 par rapport à la vis 15 et cette dernière vis-à-vis du culot 13.

Dans une variante non représentée du capuchon 2 ou du capuchon 102, le corps central 21 ou 121 présente des nervures, afin de rendre plus facile sa prise en main, notamment lorsqu'il faut faire coulisser le capuchon le long du câble 3.

Dans une autre variante non représentée, le corps central 21 ou 121 est dans une matière différente de la jupe 122 et du col 123, par exemple un thermoplastique rigide, la jupe et le col étant rapportés sur ce col central, notamment par surmoulage, par moulage bi-injection, par collage ou par clippage.

Dans une forme d'exécution particulière de cette variante, où le corps central est droit comme le corps 21, l'écrou de la borne de raccordement 14 est directement intégré à ce corps central, par exemple par surmoulage de cet écrou par la matière de ce corps central ou encore par collage ou par montage à force.

De nombreuses autres variantes sont possibles en fonction des circonstances, et on rappelle à cet égard que l'invention ne se limite pas aux exemples décrits et représentés.

## Revendications

1. Capuchon pour protéger la zone de jonction entre un élément terminal (1) de tube luminescent et un câble d'alimentation électrique (3), caractérisé en ce qu'il comporte un corps central (21 ; 121), une jupe (22 ; 122) disposée entre le corps central (21 ; 121) et l'une des extrémités du capuchon (2 ; 102) et un col (23 ; 123) disposé entre le corps central (21 ; 121) et l'autre extrémité du capuchon (2 ; 102), ledit corps central (21 ; 121) étant adapté à loger des moyens de raccordement (5) entre ledit élément terminal (1) et ledit câble (3), ladite jupe (22 ; 122) étant souple et élastique afin d'épouser la surface externe d'une portion hémisphérique (7) que comporte l'extrémité fermée de l'enveloppe en verre (4) dudit élément terminal (1), ledit col (23 ; 123) étant muni d'une lèvre (26 ; 126) annulaire élastique auto-serrante sur ledit câble (3), le capuchon (2 ; 102) étant imperméable et ne présentant aucune ouverture autre que celle bordée par ladite jupe (22 ; 122) et celle bordée par ladite lèvre (26 ; 126).

2. Capuchon selon la revendication 1, caractérisé en ce que ledit corps central (21 ; 121) est souple.

3. Capuchon selon la revendication 2, caractérisé en ce que ledit corps central présente des nervures.

4. Capuchon selon l'une quelconque des revendications 1 à 3, caractérisé en ce qu'il est formé d'une matière souple et élastique moulée d'une seule pièce.

5. Capuchon selon la revendication 4, caractérisé en ce qu'il est en silicone.

6. Capuchon selon la revendication 1, caractérisé en ce que ledit corps central est rigide.

7. Capuchon selon la revendication 6, caractérisé en ce qu'un écrou que comportent les moyens de raccordement entre ledit élément terminal et ledit câble, est fixé audit corps rigide, à l'intérieur de celui-ci.

8. Capuchon selon l'une quelconque des revendications 1 à 7, caractérisé en ce que ledit corps central (21) est droit.

9. Capuchon selon l'une quelconque des revendications 1 à 7, caractérisé en ce que ledit corps central (121) est coudé.

10. Capuchon selon l'une quelconque des revendications 1 à 9, caractérisé en ce que ladite lèvre annulaire élastique auto-serrante (26) comporte deux portions annulaires concentriques, respectivement une portion (28) de faible épaisseur qui entoure directement l'ouverture (27) que borde ladite lèvre (26), et une portion plus épaisse (29) qui entoure ladite portion de faible épaisseur.
